# EUROPEAN PATENT APPLICATION

(11) **EP 4 633 012 A1**
(43) Date of publication of application: **15.10.2025**
(21) Application number: 23900526.7
(22) Date of filing: 28.11.2023
(51) Int. Cl.: H02K 9/19

(54) **DRIVE DEVICE**

(30) Priority: 06.12.2022 JP 2022195152
(71) Applicant: TOYOTA JIDOSHA KABUSHIKI KAISHA, Toyota-shi Aichi 471-8571 (JP)
(72) Inventor: OBATA, Tatsuo, Toyota-shi, Aichi 471-8571 (JP); IKEMURA, Masashi, Toyota-shi, Aichi 471-8571 (JP); OHGATA, Yusuke, Toyota-shi, Aichi 471-8571 (JP); MAKINO, Akihiro, Toyota-shi, Aichi 471-8571 (JP); ICHIKAWA, Akitaka, Toyota-shi, Aichi 471-8571 (JP); HAYASHI, Ryuta, Toyota-shi, Aichi 471-8571 (JP); OKAMOTO, Shotaro, Toyota-shi, Aichi 471-8571 (JP)
(74) Representative: D Young & Co LLP
(86) International application number: PCT/JP2023/042598
(87) International publication number: WO 2024/122410

(57) **Abstract**

A motor unit incorporates a motor and is cooled by a first heat medium. A gear unit incorporates a gear mechanism mechanically connected to the motor. An electric unit incorporates a high-voltage component electrically connected to the motor, and is cooled by a second heat medium. A cooling unit includes a first flow path supplying the first heat medium to the motor unit, and a second flow path supplying the second heat medium to the electric unit. The respective units are arranged along an axial direction parallel to a rotation axis of the motor. When viewed along the axial direction, at least a part of the motor unit, at least a part of the gear unit, at least a part of the electric unit, and at least a part of the cooling unit overlap one another. The cooling unit is positioned between the motor unit and the electric unit.

## Description

### TECHNICAL FIELD

The art disclosed herein relates to a driving device.

### BACKGROUND ART

Japanese Patent Application Publication No. 2021-112052 describes a driving device including: a motor; a reduction gear part connected to a motor shaft of the motor; and an electric unit (e.g., inverter unit) connected to a coil of the motor via a bus bar. In the driving device, the motor is cooled by oil, and the electric unit is cooled by a coolant. The motor and the reduction gear part are arranged along a rotation axis of the motor, and the electric unit is disposed on a side surface of a casing of the motor. In the driving device, a flow path which supplies the coolant to the inverter unit and collects the coolant therefrom is connected to a radiator via the reduction gear part.

### PRIOR ART

### PATENT LITERATURE

PATENT LITERATURE 1: Japanese Patent Application Publication No. 2021-112052

### SUMMARY OF INVENTION

### TECHNICAL PROBLEM

In the conventional driving device, the flow path which supplies the coolant to the electric unit and collects the coolant therefrom is defined by extending from the side surface of the motor casing to a side surface of a casing of the reduction gear part. Due to this, a size of the driving device including the flow path tends to be large. The present specification provides an art configured to reduce the size of a driving device.

### SOLUTION TO TECHNICAL PROBLEM

A driving device disclosed herein may comprise: a motor unit, a gear unit, an electric unit, and a cooling unit. The motor unit incorporates a motor and is configured to be cooled by a first heat medium. The gear unit incorporates a gear mechanism mechanically connected to the motor. The electric unit incorporates a high-voltage component electrically connected to the motor, and is configured to be cooled by a second heat medium. The cooling unit comprises a first flow path for supplying the first heat medium to the motor unit, and a second flow path for supplying the second heat medium to the electric unit. The motor unit, the gear unit, the electric unit, and the cooling unit are arranged along an axial direction parallel to a rotation axis of the motor. When viewed along the axial direction, at least a part of the motor unit, at least a part of the gear unit, at least a part of the electric unit, and at least a part of the cooling unit overlap one another. The cooling unit is positioned between the motor unit and the electric unit.

In the above-mentioned driving device, the motor unit, the gear unit, the electric unit, and the cooling unit are arranged along the axial direction parallel to the rotation axis, and the cooling unit having the first flow path and the second flow path is positioned between the motor unit and the electric unit. Further, the respective units at least partially overlap each other. Due to this, the driving device disclosed herein can reduce its size as compared to the conventional art in which a second flow path which supplies a second thermal medium to an electric unit and collects the second thermal medium therefrom is defined on the side surface of the casing.

Details and further developments of the art disclosed herein will be described in "DESCIPTION OF EMBODIMENTS".

### BRIEF DESCRIPTION OF DRAWINGS

[FIG. 1] illustrates a plan view of an electric vehicle 100 in which a driving device 10 according to an embodiment is installed.
[FIG. 2] illustrates a circuit diagram of a circuit which cools the driving device 10.
[FIG. 3] illustrates a perspective view of the driving device 10 according to the embodiment.
[FIG. 4] illustrates a cross-sectional view taken along a line IV-IV in FIG. 3.
[FIG. 5] illustrates a cross-sectional view taken along a line V-V in FIG. 4.
[FIG. 6] illustrates a cross-sectional view taken along a line VI-VI in FIG. 4.
[FIG. 7] illustrates a plan view of a driving device 10a according to a first variant.
[FIG. 8] illustrates a plan view of a driving device 10b according to a second variant.

### DESCRIPTION OF EMBODIMENTS

In an aspect of the present teachings, the cooling unit may be in direct contact with at least one of the motor unit and the electric unit. According to such configuration, at least one of the first flow path between the cooling unit and the motor unit and the second flow path between the cooling unit and the electric unit can be made short.

In an aspect of the present teachings, the cooling unit may be in direct contact with both of the motor unit and the electric unit. According to such configuration, both of the first flow path between the cooling unit and the motor unit and the second flow path between the cooling unit and the electric unit can be made short.

In an aspect of the present teachings, the gear unit may be in direct contact with the motor unit. According to such configuration, the gear unit and the motor unit can easily be mechanically connected to each other.

In an aspect of the present teachings, the gear unit may be interposed between the motor unit and the cooling unit. In another embodiment, however, the gear unit may be interposed between the electric unit and the cooling unit.

In an aspect of the present teachings, the cooling unit may further comprise a heat exchanger. In the heat exchanger, the first flow path and the second flow path may be disposed adjacent to each other, and heat exchange may be performed between the first heat medium and the second heat medium. According to such configuration, a configuration of the cooling unit can be simplified as compared to a configuration in which heat exchange is performed between the first heat medium and another heat medium different from the second heat medium which cools the electric unit.

In an aspect of the present teachings, the cooling unit may further comprise an electric pump, and the electric pump may be disposed in the first flow path and configured to circulate the first heat medium. In another embodiment however, the electric pump may be disposed in the motor unit.

In an aspect of the present teachings, the first flow path may be configured to enable the first heat medium to circulate between the motor unit and the cooling unit. In that case, the second flow path may be configured to enable the second heat medium to circulate between the electric unit and an external radiator via the cooling unit. According to such configuration, the first heat medium circulating in the first flow path can be utilized to cool the motor in the motor unit and the second heat medium circulating in the external radiator and the second flow path can be utilized to cool a high voltage component in the electric unit.

In an aspect of the present teachings, the cooling unit may further comprise a plurality of joints to which a piping for connecting the cooling unit to the external radiator is to be connected. According to such configuration, the plurality of joints and the piping can be utilized to relatively easily connect the cooling unit and the external radiator.

In an aspect of the present teachings, the plurality of joints may be oriented in a same direction. According to such configuration, the plurality of joints and the piping can be easily connected as compared to a configuration in which the plurality of joints is oriented in different directions.

The cooling unit may further comprise a base plate oriented in a direction intersecting the rotation axis. In that case, at least a part of the first flow path and at least a part of the second flow path may be disposed on the base plate. The second flow path may extend along a periphery of the base plate on the base plate. According to such configuration, heat of the second heat medium circulating in the second flow path, which extends along the periphery of the base plate, is released outside the cooling unit. Due to this, efficiency in the cooling unit cooling the second heat medium can be improved as compared to a configuration in which the heat of the second heat medium is not discharged outside the cooling unit.

In an aspect of the present teachings, a first segment and a second segment that constitute at least a part of the second flow path may be disposed on the base plate. In that case, the first segment may extend along a first side of the periphery of the base plate, the second segment may extend along a second side of the periphery facing the first side. Further, at least a part of the first flow path may be positioned between the first segment and the second segment on the base plate. According to such configuration, the heat of the first heat medium circulating in the first flow path is transmitted to the second heat medium circulating in the first segment and the second segment of the second flow path, and further, the heat of such second heat medium is discharged outside the cooling unit. Due to this, efficiency in the cooling unit cooling the first heat medium and the second heat medium can be improved.

### (EMBODIMENTS)

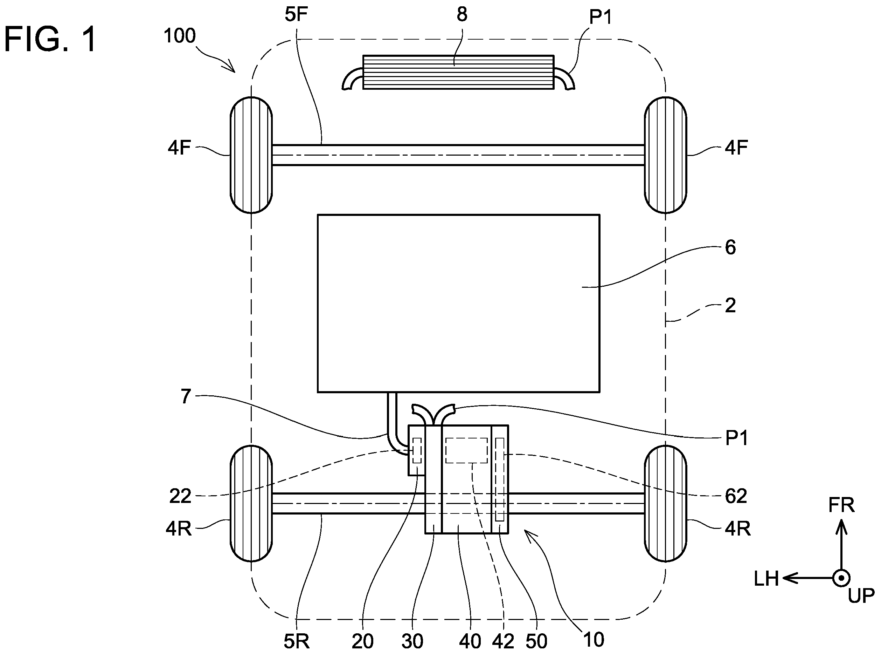

FIG. 1 illustrates a schematic view of an electric vehicle 100 in which a driving device 10 according to an embodiment is installed. The electric vehicle 100 comprises, in addition to the driving device 10, a body 2, a front drive shaft 5F, a pair of front wheels 4F, a rear drive shaft 5R, a pair of rear wheels 4R, a radiator 8, and a battery pack 6. For easier understanding, in FIG. 1, the body 2 of the electric vehicle 100 is shown in a broken line. The electric vehicle 100 in the present specification may include a hybrid vehicle and a fuel cell electric vehicle, as well as an electric-powered vehicle. In a coordination system in the drawings, FR indicates frontward with respect to the electric vehicle 100, UP means upward with respect to the electric vehicle 100, and LH means leftward with respect to the electric vehicle 100. Hereafter, "up/upper/above", "down/lower/below", "left", "right", "front" and "rear" will be indicated based on the coordination system in the drawings.

The pair of front wheels 4F is disposed at opposing ends of the front drive shaft 5F, and the pair of rear wheels 4R is disposed at opposing ends of the rear drive shaft 5R.

The driving device 10 is positioned below a rear seat (not illustrated) of the electric vehicle 100. The driving device 10 drives the pair of rear wheels 4R via the rear drive shaft 5R of the electric vehicle 100. The driving device 10 comprises an electric unit 20, a cooling unit 30, a motor unit 40, and a gear unit 50. The electric unit 20 incorporates an inverter 22. The motor unit 40 incorporates a motor 42. The gear unit 50 incorporates a gear mechanism 52. Although details will be described later, each of the units 20, 30, 40, and 50 of the driving device 10 has a casing, and adjacent casings are fastened to each other. The cooling unit 30 mainly cools the inverter 22 of the electric unit 20 and the motor 42 of the motor unit 40.

The battery pack 6 is disposed below a floor panel (not illustrated) of the electric vehicle 100. The battery pack 6 supplies the driving device 10 with electric power. Using this power, the driving device 10 drives the pair of rear wheels 4R. Also, the driving device 10 functions as a generator. The battery pack 6 stores electric power supplied by the driving device 10.

The inverter 22 is connected to the battery pack 6 by a power cable 7. The inverter 22 is an apparatus configured to convert direct current power of the battery pack 6 to alternate current power suitable for driving the motor 42. Due to this, the inverter 22 is a high voltage component to which high voltage power is applied. The "high voltage" herein refers to an operating voltage of more than DC 60V and 1500V or less or an operation voltage of more than AC 30V (effective value) and 1000V (effective value) or less. Further, "high voltage component" in the present specification may be typically a component electrically connected to the motor 42 and having a function of controlling the electric power supplied to the motor 42. In this case, a cable connected to the motor 42 does not apply to the "high voltage component". Alternatively in a variant, the electric unit 20 may incorporate, instead of or in addition to the inverter 22, a DC/DC converter configured to boost the DC power of the battery pack 6, for example.

The radiator 8 is disposed at a front end of the body 2 in the electric vehicle 100. The radiator 8 is a component of a thin, substantially cuboid shape and extends along a vehicle width direction and an up-down direction. The radiator 8 comprises a plurality of hoses (not illustrated) extending in the up-down direction. LLC (Long Life Coolant) circulates within the plurality of hoses. When the electric vehicle 100 runs, wind blows between the plurality of hoses. Due to this, the LLC flowing in the plurality of hoses is cooled. The radiator 8 is connected to the cooling unit 30 of the driving device 10 by a piping P1.

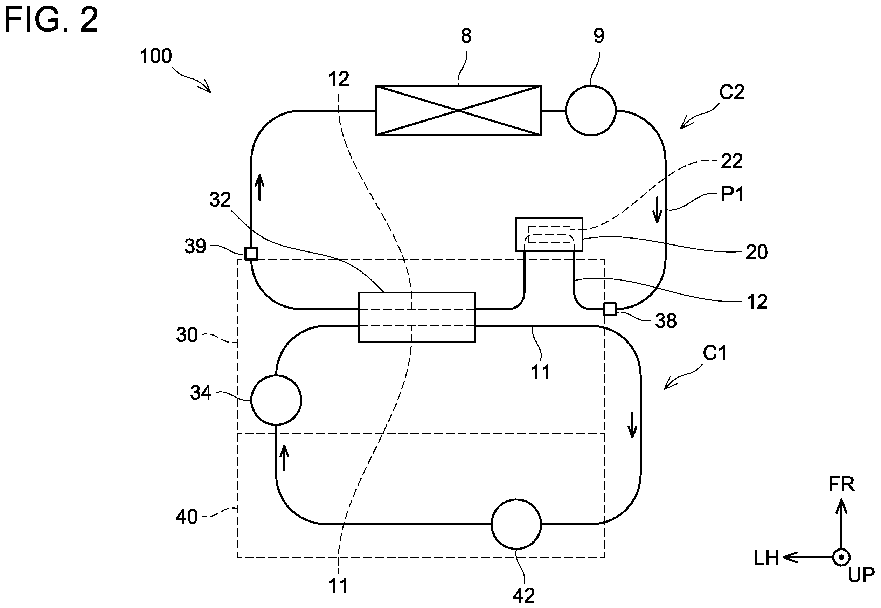

With reference to FIG. 2, a circuit which cools the driving device 10 in the electric vehicle 100 will be described. The electric vehicle 100 comprises a first cooling circuit C1 and a second cooling circuit C2. The first cooling circuit C1 is a circuit for cooling the motor 42 incorporated in the motor unit 40. The motor 42, an electric pump 34, and a heat exchanger 32 are connected in the first cooling circuit C1 by a first flow path 11. The electric pump 34 and the heat exchanger 32 are disposed in the first flow path 11 within the cooling unit 30. In the first cooling circuit C1, the electric pump 34 causes oil to be circulated between the cooling unit 30 and the motor unit 40 that are connected via the first flow path 11. In other words, the first flow path 11 is configured such that the oil circulates between the motor unit 40 and the cooling unit 30. Due to this, the motor 42 in the motor unit 40 is cooled by the oil. Alternatively in a variant, the electric pump 34 may be disposed in the motor unit 40.

The second cooling circuit C2 is a circuit for cooling the inverter 22 incorporated in the electric unit 20. In the second cooling circuit C2, the radiator 8, a water pump 9, and the cooling unit 30 are connected by the piping P1. The cooling unit 30 has a second flow path 12, an upstream joint 38, and a downstream joint 39. The piping P1 is connected to the second flow path 12 within the cooling unit 30 via the upstream joint 38 and the downstream joint 39 of the cooling unit 30. As described earlier, the LLC which was cooled by the radiator 8 circulates in the piping P1. The LLC flows into the cooling unit 30 via the upstream joint 38. That is, the upstream joint 38 is an inlet of the cooling unit 30 for the LLC. In the cooling unit 30, the LLC flows through the electric unit 20, and then flows through the heat exchanger 32. Thereafter, the LLC returns to the radiator 8 via the downstream joint 39 and the piping P1. That is, the downstream joint 39 is an outlet of the cooling unit 30 for the LLC. As such, the second flow path 12 is configured such that the LLC circulates between the electric unit and the radiator 8 via the cooling unit 30. Due to this, the cooling unit 30 can cool the inverter 22 incorporated in the electric unit 20.

As illustrated in FIG. 2, in the heat exchanger 32, the first flow path 11 and the second flow path 12 are disposed adjacent to each other. Due to this, in the heat exchanger 32, heat exchange is performed between the oil within the first flow path 11 and the LLC within the second flow path 12. Since the heat of the motor 42 has been transferred to the oil, a temperature of the oil is higher than a temperature of the LLC. Due to this, in the heat exchanger 32, the oil is cooled by the LLC. By arranging the heat exchanger 32 in the cooling unit 30, the LLC for cooling the inverter 22 can be utilized to cool the oil for cooling the motor 42. Due to this, for example as compared to a configuration in which the oil is cooled by using another heat medium different from the LLC, the configuration of the cooling unit 30 can be simplified.

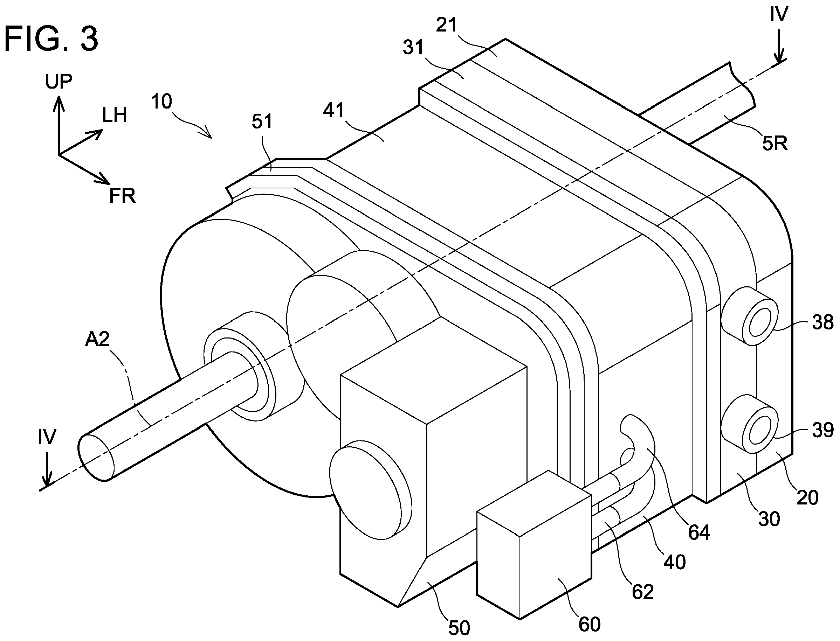

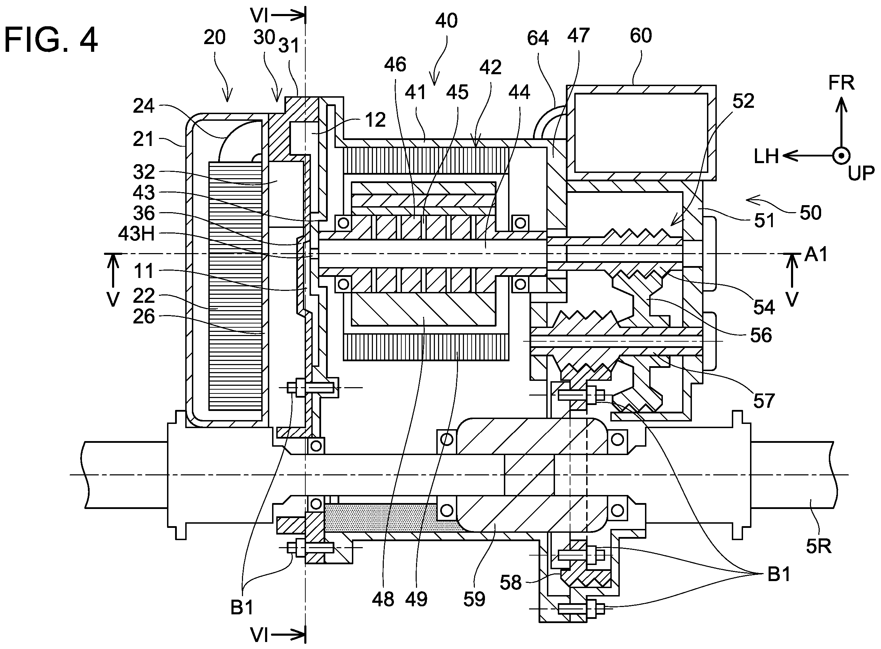

With reference to FIG. 3, a configuration of the driving device 10 will be described. The electric unit 20 comprises an electric casing 21. The cooling unit 30 comprises a cooling casing 31. The motor unit 40 comprises a motor casing 41. The gear unit 50 comprises a gear casing 51. The cooling casing 31 is adjacent to the electric casing 21, and is in direct contact therewith. The motor casing 41 is interposed between the cooling casing 31 and the gear casing 51, and is in direct contact with each of the casings 31, 51. The respective cases adjacent to each other are fastened by a plurality of bolts B1 (see FIG. 4). That is, when the driving device 10 is seen along a left-right direction, the motor casing 41 of the motor unit 40, the gear casing 51 of the gear unit 50, the electric casing 21 of the electric unit 20, and the cooling casing 31 of the cooling unit 30 overlap each other. Here, in the driving device 10 according to the present embodiment, each of the respective casings 41, 51, 21, and 31 entirely overlaps its adjacent casing, but in a variant a part of each of the casings 41, 51, 21, and 31 may overlap each other.

A device box 60 is arranged on a front surface of the gear unit 50. The device box 60 houses, for example, a charger. The charger within the device box 60 is connected to the motor unit 40 by a pair of cables 62, 64.

Further, the upstream joint 38 and the downstream joint 39 are oriented frontward on a front surface of the cooling casing 31. By arranging the respective joints 38, 39 oriented in a same direction, the piping P1 can be easily connected thereto, as compared to a configuration in which the respective joints 38, 39 are oriented in different directions. Furter, as illustrated in FIG. 1, the radiator 8 is disposed on a front side of the driving device 10. Due to this, the piping P1 can be shortened as compared to a configuration in which the respective joints 38, 39 are arranged on a rear surface of the driving device 10.

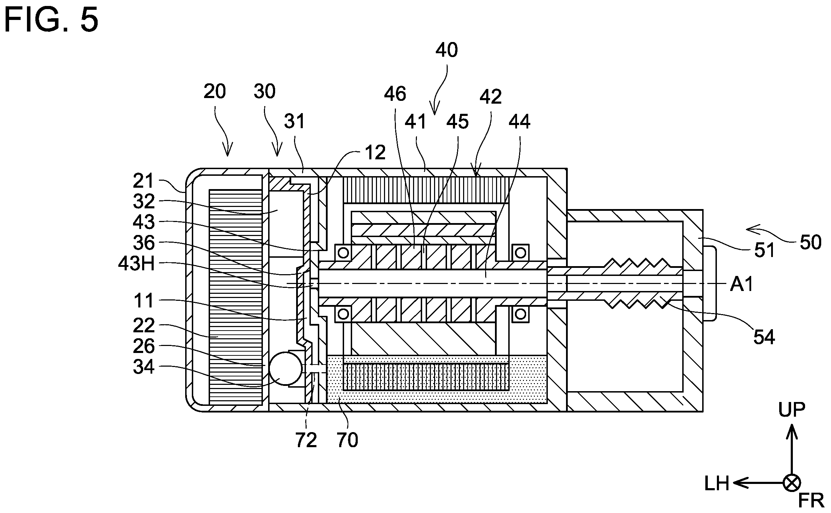

With reference to FIGS. 4 and 5, an internal structure of the driving device 10 will be described. FIG. 4 illustrates a cross-sectional view taken along a line IV-IV in FIG. 3, and indicates details of inside of the driving device 10 as seen from above. FIG. 5 illustrates a cross-sectional view taken along a line V-V in FIG. 4, and indicates details of inside of the driving device 10 as seen from a rear side. The electric unit 20 has the inverter 22 arranged on a right-side plate 26 of the electric casing 21. The plate 26 constitutes a right-side sidewall of the electric casing 21. Also, the electric unit 20 houses an in-casing piping 24 within the electric casing 21, in addition to the inverter 22. The in-casing piping 24 is connected to the second flow path 12 of the cooling unit 30, and causes the LLC to circulate in the electric casing 21 of the electric unit 20. Also, the plate 26 of the electric casing 21 covers the cooling casing 31 of the cooling unit 30 from a left side. That is, the plate 26 of the electric casing 21 constitutes a left-side sidewall of the cooling casing 31. As such, by the plate 26 of the electric casing 21 forming a part of the cooling casing 31, mass of the cooling casing 31 can be reduced. Also, the electric casing 21 of the electric unit 20 in direct contact with the cooling casing 31 of the cooling unit 30. Due to this, a distance between the in-casing piping 24 of the electric unit 20 and the cooling casing 31 of the cooling unit 30 is short. Thus, the second flow path 12 can be shortened.

The cooling unit 30 has a base plate 36. The base plate 36 is a wall extending in the up-down direction and a front-rear direction. The base plate 36 constitutes a right-side sidewall of the cooling casing 31 of the cooling unit 30. A plurality of dents is formed on a right surface of the base plate 36. The base plate 36 faces a top plate 43 of the motor casing 41. The base plate 36 is fastened to the top plate 43 by the plurality of bolts B1. As a result of this, the base plate 36 and the top plate 43 abut, by which the dents of the base plate 36 are sealed. The base plate 36 of the cooling unit 30 and the motor casing 41 of the motor unit 40 define the first flow path 11 and the second flow path 12.

The motor unit 40 houses the motor 42 in the motor casing 41. The motor 42 comprises a motor shaft 46, a rotor 48, and a stator 49. The rotor 48 has a cylindrical shape, and is positioned radially outside the motor shaft 46 (i.e., upper and lower sides of paper surface of FIG. 4). The rotor 48 is constituted of a magnetic body, and houses permanent magnets therein. The stator 49 has a cylindrical shape, and is positioned radially outside the rotor 48. The stator 49 includes a stator core constituted of a magnetic body and a stator coil constituted of a conductive body. The stator coil is electrically connected to the inverter 22 of the electric unit 20. The motor shaft 46 penetrates the rotor 48 and the stator 49 to extend in the left-right direction. When the stator coil of the stator 49 is supplied with current by the inverter 22, the rotor 48 and the motor shaft 46 rotate about a rotation axis A1.

The motor shaft 46 has a cylindrical shape, and has an oil hole 44 extending along the rotation axis A1. The top plate 43 of the motor casing 41 in the motor unit 40 has a through hole 43H extending therethrough. The through hole 43H is coaxial with the rotation axis A1 of the motor 42. The through hole 43H communicates the first flow path 11 of the cooling unit 30 with the oil hole 44 of the motor unit 40. Due to this, the oil in the first flow path 11 flows into the oil hole 44 through the through hole 43H. Further, the oil hole 44 of the motor shaft 46 has a plurality of diffusion holes 45. The plurality of diffusion holes 45 extends radially, and radially communicates inside and outside the motor shaft 46.

When the motor shaft 46 rotates about the rotation axis A1 with the oil flowed in the oil hole 44 through the through hole 43H, the oil in the oil hole 44 is diffused radially outside the motor shaft 46 through the diffusion holes 45. Due to this, the oil cools the motor 42. Further, the oil enters between the motor shaft 46 and bearing(s) for example, thereby further smoothing the rotation of the rotor 48.

As illustrated in FIG. 5, oil 70 ejected from the diffusion holes 45 drips in the motor casing 41, and accumulates at a bottom of the motor casing 41. The oil 70 accumulated at the bottom of the motor casing 41 is suctioned via an oil flow path 72, and returns into the first flow path 11 by the electric pump 34 of the cooling unit 30. The oil having returned into the first flow path 11 passes through the heat exchanger 32, and is re-supplied to the oil hole 44 of the motor 42 through the through hole 43H. As such, the oil circulates between the first flow path 11 and the motor unit 40 by the electric pump 34.

In the present embodiment, the base plate 36 of the cooling unit 30 is in direct contact with the top plate 43 of the motor unit 40. Due to this, the first flow path 11 which supplies the oil to the oil hole 44 of the motor 42 can be shortened.

The gear unit 50 comprises the gear mechanism 52 within the gear casing 51. The gear mechanism 52 comprises a shaft gear 54, a first link gear 56, a second link gear 57, a third link gear 58, and a differential gear 59. The shaft gear 54 is coupled to the motor shaft 46, and extends along the rotation axis A1. The shaft gear 54 rotates about the rotation axis A1 together with the motor shaft 46.

The motor casing 41 of the motor unit 40 comprises a plate 47 on its right side. The plate 47 constitutes a right-side sidewall of the motor casing 41. The shaft gear 54 penetrates a through hole in the plate 47 and is coupled to the motor shaft 46. The plate 47 of the motor casing 41 constitutes a part of a left-side sidewall of the gear casing. Since the gear unit 50 is in direct contact with the motor unit 40 in the driving device 10 according to the present embodiment, the gear unit 50 and the motor unit 40 can easily be mechanically connected to each other.

The first link gear 56 meshes with the shaft gear 54, and rotates along with rotation of the shaft gear 54. The second link gear 57 is coupled to the first link gear 56, and thus rotates along with rotation of the first link gear 56. The third link gear 58 meshes with the second link gear 57, and thus rotates along with rotation of the second link gear 57.

The third link gear 58 is fastened to the differential gear 59 by the bolts B1. The differential gear 59 rotates along with rotation of the third link gear 58. The differential gear 59 drives the rear drive shaft 5R. Due to this, the rotation of the motor 42 is transmitted to the rear drive shaft 5R, by which the electric vehicle 100 runs.

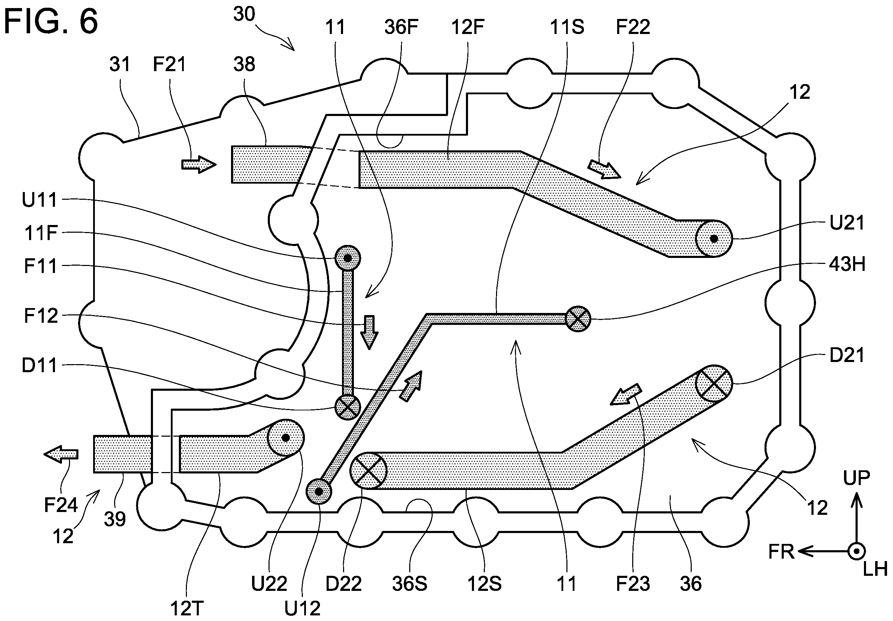

A detailed structure of the cooling unit 30 will be described with reference to FIG. 6. FIG. 6 is a cross-sectional view of FIG. 4 taken along a line VI-VI, and shows a shape of the base plate 36 of the cooling unit 30 as seen from the left side. That is, FIG. 6 shows a shape of the base plate 36 as seen along the axial direction parallel to the rotation axis A1. That is, the base plate 36 is disposed in an orientation intersecting the axial direction parallel to the rotation axis A1.

The base plate 36 has a substantially rectangular shape extending in the front-rear direction. A periphery of the base plate 36 includes plural mount surfaces for the bolts B1 (see FIG. 4) to be screwed in. The periphery of the base plate 36 includes a first side 36F located at an upper end of the base plate 36 and a second side 36S located at a lower end of the base plate 36. That is, the first side 36F and the second side 36S are opposed to each other.

As mentioned above, the base plate 36 includes the first flow path 11 and the second flow path 12. As illustrated in FIG. 6, a diameter of the second flow path 12 is greater than a diameter of the first flow path 11. The second flow path 12 includes a first segment 12F, a second segment 12S, and a third segment 12T. The first segment 12F is connected to the upstream joint 38, and extends in the front-rear direction along the first side 36F. The second segment 12S extends in the front-rear direction along the second side 36S. The third segment 12T is connected to the downstream joint 39.

The first flow path 11 includes a first segment 11F and a second segment 11S. The first segment 11F extends in the up-down direction. A front part of the second segment 11S extends between the second segment 12S and the third segment 12T of the second flow path. The front part of the second segment 11S is displaced upward toward its rear side. The second segment 11S bends at a center part of the base plate 36 to extend rearward.

As indicated by an arrow F21, the LLC flows from the upstream joint 38 into the first segment 12F of the second flow path 12. Thereafter, as indicated by an arrow F22, the LLC flows rearward along the first segment 12F. Thereafter, the LLC flows leftward (i.e., to a foreside of paper surface of FIG. 6) in a second ascending flow path U21. Due to this, the LLC cools the inverter 22 via the in-casing piping 24. Subsequently, the LLC returns from the electric unit 20 to the second segment 12S of the first flow path through a second descending flow path D21. As indicated by an arrow F23, the LLC flows frontward along the second segment 12S, flows into the heat exchanger 32 through a second descending flow path D22, and returns to the third segment 12T through a second ascending flow path U22. The LLC having returned to the third segment 12T is discharged from the downstream joint 39 as shown in an arrow F24, and circulates in the radiator 8.

The oil is caused by the electric pump 34 (see FIG. 4) to flow into the first segment 11F of the first flow path 11 via an oil flow path 72 and a first ascending flow path U11. That is, the first ascending flow path U11 is an inlet of the cooling unit 30 for the oil. Thereafter, the oil flows downward along the first segment 11F as shown in an arrow F12, and flows into the heat exchanger 32 via a first descending flow path D11. The oil having passed through the heat exchanger 32 returns to the second segment 11S of the first flow path 11 via a first ascending flow path U12. As shown by the arrow F12, the oil flows in the center part of the base plate 36 along the second segment 11S, and is supplied through the through hole 43H to the oil hole 44 of the motor unit 40. That is, the through hole 43H is an outlet of the cooling unit 30 for the oil.

As illustrated in FIG. 6, each segment 12F, 12S, 12T of the second flow path 12 extends along the periphery of the base plate 36. Due to this, the heat of the LLC in the second flow path 12 is discharged outside the cooling unit 30. Due to this, efficiency in the cooling unit 30 cooling the LLC can be improved.

Further, in the up-down direction, the first ascending flow path U11 and the through hole 43H in the first flow path 11 are located between the upstream joint 38 and the downstream joint 39. That is, in the driving device 10 of the present embodiment, the inlet and outlet for the LLC of the cooling unit 30 are radially outside of the cooling casing 31 relative to the inlet and outlet for the oil of the cooling unit 30. Also, in the front-rear direction, the first ascending flow path U11 and the through hole 43H in the first flow path 11 are located between the upstream joint 38 and the second ascending flow path U21, and further are located between the downstream joint 39 and the second descending flow path D21. In other words, the second flow path 12 which supplies the LLC to the electric unit 20 extends longer in the front-rear direction than the first flow path 11 which supplies the oil to the motor 42.

Here, a temperature of the oil which cools the motor 42 is for example 100 degrees or more. Contrary to this, a temperature of the LLC which cools the inverter 22 is for example about 60 degrees. Further, a temperature outside the cooling unit 30 is for example about 30 degrees. If the LLC circulates in the center part of the base plate 36 and the high-temperature oil circulates around it, the heat of the oil is transferred to the LLC, by which the temperature of the LLC rises. In that case, cooling efficiency of the inverter 22 is deteriorated. In the driving device 10 of the present embodiment, each segment 11F, 11S of the first flow path 11 is located between the first segment 12F and the second segment 12S of the second flow path 12. Due to this, in the cooling unit 30, the oil with the highest temperature circulates in the center part of the base plate 36, and the LLC with a temperature that is lower than that of the oil circulates around the oil. Due to this, the heat of the oil is transferred to the LLC, and the heat of the LLC is discharged outside the cooling unit 30. This can suppress the cooling efficiency of the inverter 22 from being deteriorated, and efficiency of the cooling unit 30 cooling the oil and the LLC can be improved.

In the driving device 10 of the present embodiment, the cooling unit 30 is in direct contact with both the motor unit 40 and the electric unit 20, and also the gear unit 50 is in direct contact with the motor unit 40. As a result of this, along the axial direction parallel to the rotation axis A1 from the left, as illustrated in FIG. 3, the electric unit 20, the cooling unit 30, the motor unit 40, and the gear unit 50 are arranged in this order. Further, as mentioned above, as seen along the axial direction parallel to the rotation axis A1, at least a part of each of the units 20, 30, 40, 50 overlaps one another. Also, the cooling unit 30 is located between the motor unit 40 and the electric unit 20. Due to this, for example, as compared to the conventional art in which the second flow path 12 is defined on the side wall in the up-down direction of the motor casing 41, the size in the up-down direction of the driving device 10 can be made smaller.

As mentioned above, the driving device 10 is positioned below the rear seat (not illustrated). Since the rear seat can be positioned at a lower height level in a passenger compartment of the electric vehicle 100 by making the size of the driving device 10 small, a passenger compartment space of the electric vehicle 100 can be increased. Alternatively in a variant, the driving device 10 may be positioned below a plate constituting a floor surface of a luggage space of the electric vehicle 100. In this case, by making the size of the driving device 10 small, the luggage space can be increased.

Also, according to the driving device 10 of the present embodiment, as compared to the conventional art in which the second flow path 12 is defined on the sidewall in the up-down direction of the motor casing 41, the second flow path 12 can easily be defined. Further, in the driving device 10 of the present embodiment, the first flow path 11 of the cooling unit 30 is connected to the oil hole 44 defined in the motor shaft 46 of the motor 42, and the second flow path 12 is connected to the in-casing piping 24 of the electric unit 20. Due to this, by arranging the cooling unit 30 between the motor 42 and the electric unit 20, lengths of the first flow path 11 between the motor 42 and the cooling unit 30 and the second flow path 12 between the electric unit 20 and the cooling unit 30 can be shortened. As a result of this, the size of the driving device 10 can be made smaller. In the present embodiment, the oil is an example for "first heat medium", and the LLC is an example for "second heat medium".

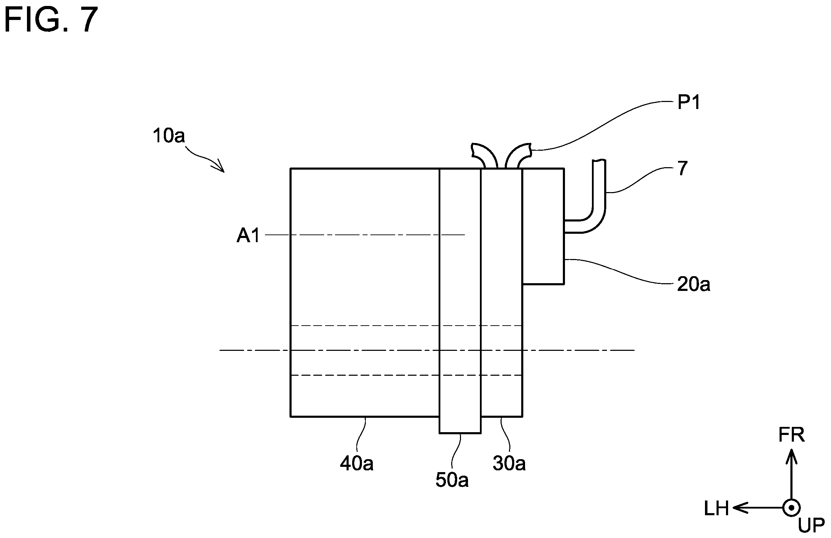

However, the arrangement of the respective units 20, 30, 40, 50 is not limited to the arrangement in the driving device 10. For example, as in a driving device 10a according to a first variant illustrated in FIG. 7, a gear unit 50a may be interposed between a motor unit 40a and a cooling unit 30a. In that case, an electric unit 20a may be arranged to the right of the cooling unit 30a. In the driving device 10a of the first variant also, the cooling unit 30a is arranged along the rotation axis A1 of the motor 42 in a positional relationship of being located between the motor unit 40a and the electric unit 20a.

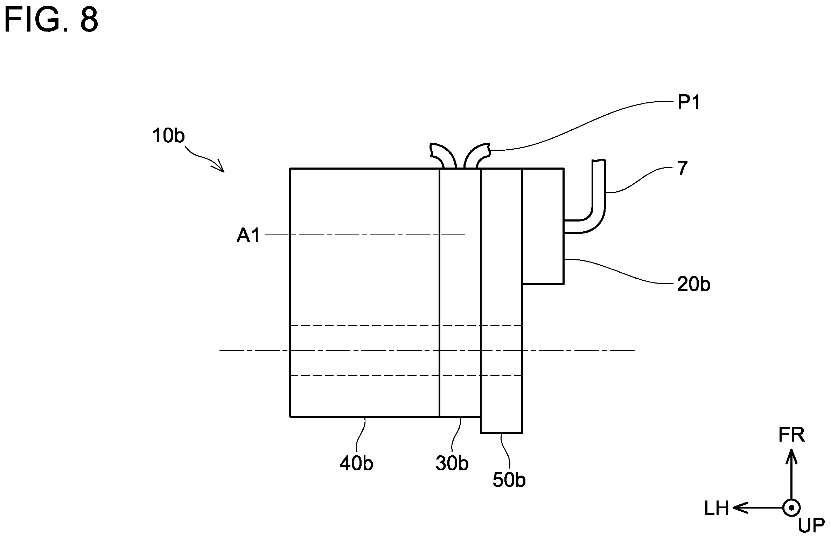

Further, as in a driving device 10b of a second variant illustrated in FIG. 8, a gear unit 50b may be interposed between an electric unit 20b and a cooling unit 30b. In the driving device 10b of the second variant also, the cooling unit 30b is arranged along the rotation axis A1 of the motor 42 in a positional relationship of being located between a motor unit 40b and the electric unit 20b.

While the art disclosed herein has been described in detail with specific examples, these are intended to be illustrative, and not limiting the scope of claims. The art described in the claims is intended to embrace alternatives, and/or modifications. Some of variants of the above embodiment are listed below:
(Variant 1) The driving device 10 may be arranged in a front compartment of the electric vehicle 100. In that case, the gear mechanism 52 of the gear unit 50 may be connected to the front drive shaft 5F.
(Variant 2) The upstream joint 38 may be arranged on an upper surface of the cooling casing 31 of the cooling unit 30, for example, and the downstream joint 39 may be arranged on a back surface of the cooling casing 31. That is, the joints 38, 39 may not be oriented in a same direction.
(Variant 3) In each of the above embodiments, the first flow path 11 and the second flow path 12 are defined by the base plate 36 of the cooling unit 30 and the top plate 43 of the motor unit 40. However, in a variant, the cooling unit 30 may further comprise a second base plate, and the base plate 36 and a third base plate may define the first flow path 11 and the second flow path 12. In that case, the second base plate may abut the top plate 43 of the motor casing 41 of the motor unit 40. In the present variant, the second base plate of the cooling unit 30 abutting the top plate 43 of the motor unit 40 is an example of being "in direct contact".
(Variant 4) The second flow path 12 may not be disposed along the periphery of the base plate 36. In that case, for example, the first flow path 11 may be disposed along the periphery of the base plate 36.

The technical elements explained in the present description or drawings provide technical utility either independently or through various combinations, and are not limited to the combinations described at the time the claims are filed. Further, the purpose of the examples illustrated by the present description or drawings is to satisfy multiple objectives simultaneously, and satisfying any one of those objectives gives technical utility to the present disclosure.

## Claims

1. A driving device, comprising:
a motor unit incorporating a motor and being configured to be cooled by a first heat medium;
a gear unit incorporating a gear mechanism mechanically connected to the motor;
an electric unit incorporating a high-voltage component electrically connected to the motor, and being configured to be cooled by a second heat medium; and
a cooling unit comprising a first flow path for supplying the first heat medium to the motor unit, and a second flow path for supplying the second heat medium to the electric unit, wherein the motor unit, the gear unit, the electric unit, and the cooling unit are arranged along an axial direction parallel to a rotation axis of the motor,
when viewed along the axial direction, at least a part of the motor unit, at least a part of the gear unit, at least a part of the electric unit, and at least a part of the cooling unit overlap one another, and
the cooling unit is positioned between the motor unit and the electric unit.

2. The driving device according to claim 1, wherein the cooling unit is in direct contact with at least one of the motor unit and the electric unit.

3. The driving device according to claim 2, wherein the cooling unit is in direct contact with both of the motor unit and the electric unit.

4. The driving device according to claim 3, wherein the gear unit is in direct contact with the motor unit.

5. The driving device according to claim 2, wherein the gear unit is interposed between the motor unit and the cooling unit.

6. The driving device according to claim 2, wherein the gear unit is interposed between the electric unit and the cooling unit.

7. The driving device according to claim 1, wherein the cooling unit further comprises a heat exchanger, and
in the heat exchanger, the first flow path and the second flow path are disposed adjacent to each other, and heat exchange is performed between the first heat medium and the second heat medium.

8. The driving device according to claim 1, wherein the cooling unit further comprises an electric pump, and
the electric pump is disposed in the first flow path and configured to circulate the first heat medium.

9. The driving device according to claim 1, wherein the first flow path is configured to enable the first heat medium to circulate between the motor unit and the cooling unit, and
the second flow path is configured to enable the second heat medium to circulate between the electric unit and an external radiator via the cooling unit.

10. The driving device according to claim 9, wherein the cooling unit further comprises a plurality of joints to which a piping for connecting the cooling unit to the external radiator is to be connected.

11. The driving device according to claim 10, wherein the plurality of joints is oriented in a same direction.

12. The driving device according to claim 1, wherein the cooling unit further comprises a base plate oriented in a direction intersecting the rotation axis,
at least a part of the first flow path and at least a part of the second flow path are disposed on the base plate, and
the second flow path extends along a periphery of the base plate on the base plate.

13. The driving device according to claim 12, wherein a first segment and a second segment that constitute at least a part of the second flow path are disposed on the base plate,
the first segment extends along a first side of the periphery of the base plate,
the second segment extends along a second side of the periphery facing the first side, and
at least a part of the first flow path is positioned between the first segment and the second segment on the base plate.
